# FASCICULE DE BREVET EUROPEEN

(11) **EP 0 268 539 B1**
(45) Date de publication et mention de la délivrance du brevet: **09.03.1994**
(21) Numéro de dépôt: 87420307.8
(22) Date de dépôt: 12.11.1987
(51) Int. Cl.: B41M 1/40, B29D 23/20, B29D 22/00, B29C 65/00

(54) **Procédé de réalisation et de décoration d'un contenant plastique comportant un col**
Verfahren zum Herstellung und Dekorieren eines Kunststoffbehälters mit Hals
Process for making and decorating a plastic container with a neck

(30) Priorité: 13.11.1986 FR 8616281
(43) Date de publication de la demande: 25.05.1988
(73) Titulaire: AMS EUROPE, F-72260 Marolles les Braults (FR)
(72) Inventeur: Tartaglione, André, F-01100 Oyonnax (FR)
(74) Mandataire: Moncheny, Michel

(56) Documents cités:
- FR-A- 1 407 064
- US-A- 2 673 374
- US-A- 2 913 768
- US-A- 3 926 401
- PATENT ABSTRACTS OF JAPAN, vol. 10, no. 323 (M-531)[2379], 5 novembre 1986; JP-A-61 130 027 (YOSHINO KOGYOSHO CO. LTD) 17-06-1986
- PLASTVERARBEITER, vol. 38, no. 8, Août 1987, page 10, Speyer, DE; "Vom Rohr zum Fass"

## Description

La présente invention se rapporte à un procédé de réalisation et de décoration d'un contenant plastique comportant un col.

Il est connu de réaliser ce genre de contenants tels que, par exemple, des flacons à usage cosmétique ou pharmaceutique, en utilisant la technique de l'invention-soufflage ou de l'extrusion-soufflage. Par exemple, en extrusion-soufflage, la paraison qui sort verticalement de l'extrudeuse est introduite dans un moule en deux parties, puis écartée par soufflage dans ce moule. On coupe ensuite le sommet du col ainsi formé dans le moule, puis on ouvre le moule en écartant ses deux parties : le flacon terminé tombe alors dans un bac récepteur ou sur un convoyeur d'évacuation.

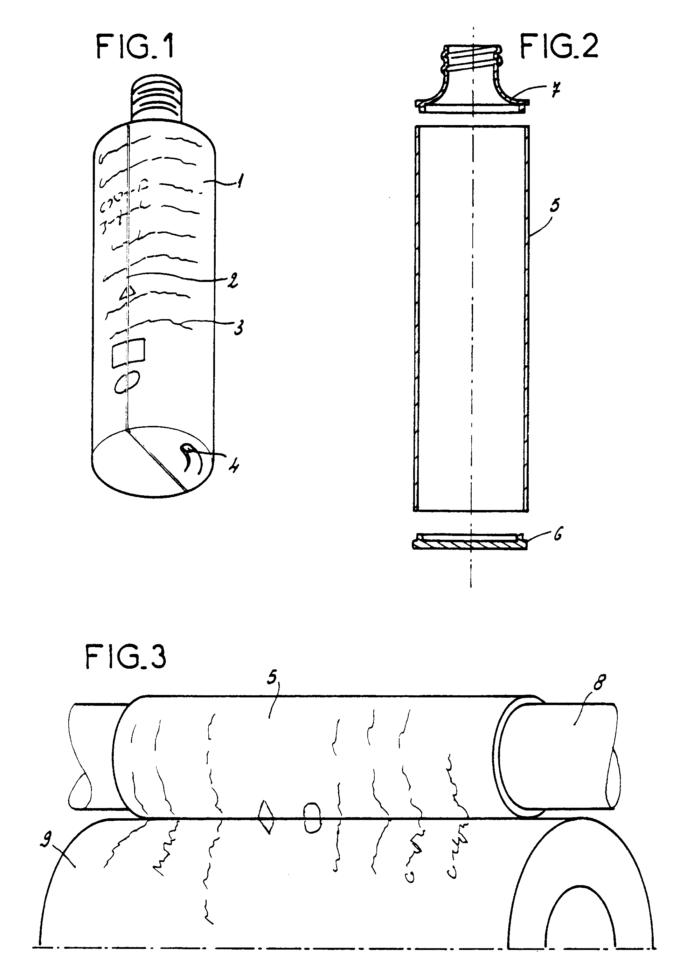

La figure 1 jointe est une vue schématique en perspective d'un tel flacon 1 de type connu. Il comporte une nervure continue 2, dite "plan de joint", qui est due à la ligne de séparation des deux parties du moule. A l'impression du motif de décoration 3, il apparaît un défaut d'aspect si ce motif 3 chevauche le plan de joint 2. Pour éviter ceci, on est amené à prévoir sur le flacon un repère de position 4 qui sert à placer, dans l'imprimante, le flacon 1, de manière que l'impression ne chevauche pas ce plan de joint 2. Il est en outre ensuite nécessaire de vérifier le produit fini. Ces nécessités ont pour inconvénient de compliquer à la fois l'installation et le procédé d'impression.

Par ailleurs, ces flacons plastiques sont assez peu rigides, et ils se déformeraient sous l'action du rouleau imprimeur, ou "blanchet", si l'on n'appliquait pas une surpression d'air dans le flacon pendant l'impression. Là encore, l'application de cette surpression complique l'installation d'impression.

Enfin, un dernier inconvénient de cette réalisation par injection-soufflage ou extrusion-soufflage est le manque de régularité en épaisseur du flacon obtenu.

L'invention vise à remédier à ces inconvénients. Elle se rapporte donc à un procédé de réalisation et de décoration d'un contenant plastique qui comporte un col. Selon ce procédé, on réalise ce contenant par injection thermoplastique du corps, soit seul, c'est-à-dire sans col ni fond, soit avec le col sans le fond, soit avec le fond sans le col, puis on réalise l'impression de la décoration avec le corps du contenant enfilé sur un mandrin, en suite de quoi on fixe le col et/ou le fond, réalisé(s) séparément, sur le corps ainsi décoré.

L'invention sera bien comprise, et ses avantages et autres caractéristiques ressortiront, au cours de la description suivante d'un exemple non limitatif de réalisation, en référence aux dessins schématiques annexés dans lesquels :
Figure 2 est une vue en coupe longitudinale d'un flacon réalisé par ce procédé, avant impression et assemblage ;
Figure 3 est une représentation très simplifiée de l'opération d'impression d'une décoration sur ce flacon.

En se référant à la figure 2, on réalise tout d'abord, par injection thermoplastique, le corps cylindrique 5 du flacon, son fond 6 et son col 7. Par la technique d'injection, les épaisseurs de ces trois éléments sont bien régulières et il n'u a pas de plan de joint. En variante, seul le corps 5 est réalisé par injection, et les deux autres éléments 6 et 7 sont réalisés par tout autre technique.

L'impression est ensuite réalisée en enfilant le corps 5 sur un mandrin 8, figure 3, ce qui permet d'avoir un parfait appui sur le blanchet 9 de l'imprimante. Cette technique d'impression des corps creux de révolution, à génératrices parallèles ou non, par enfilage de ce corps dans un mandrin, est une technique connue en soi.

Après cette opération d'impression, le fond 6 et le col 7 sont assemblés par collage, soudage ou clipsage, sur le corps 5. En variante, ils pourraient aussi être assemblés par vissage, si les trois éléments 5 à 7 sont réalisés pour présenter des filetages en conséquence.

L'invention n'est bien évidemment pas limitée à l'exemple de réalisation qui vient d'être décrit. Le contenant plastique peut avoir d'autres formes (forme elliptique, tronconique, polygonale, ...). On peut réaliser, par injection tout d'abord, l'ensemble du corps 5 et du col 7, ou bien l'ensemble du corps 5 et du fond 6, puis, après impression, assembler sur cet ensemble l'élément restant, respectivement 6 ou 7, cet élément ayant été, soit lui aussi réalisé par injection, soit réalisé par tout autre technique. Un autre avantage du procédé de l'invention est que l'on peut réaliser les différents éléments à assembler, par exemple 5, 6 et 7, par injection de matières plastiques de différentes couleurs, ce qui donne au flacon obtenu une esthétique différente de celle obtenue avec les procédés connus jusqu'alors.

L'invention s'applique à toutes sortes de contenants, qu'ils soient de révolution ou non. Ils peuvent être par exemple parallélépipédiques, de section carrée, rectangulaire, ou triangulaire. Les différents éléments 5,6,7 à assembler peuvent être de matières plastiques différentes. Un même contenant peut comporter plusieurs cols identiques ou différents. Le corps 5 peut comporter un ou plusieurs cloisonnements latéraux ou verticaux. Le ou les cols peuvent comporter un bouchage intégré, du type simple ou non, une inviolabilité avec déchirement possible, une pompe doseuse intégrée, etc....

La présente invention se rapporte à un procédé de réalisation et de décoration d'un contenant plastique comportant un col.

Il est connu de réaliser ce genre de contenants tels que, par exemple, des flacons à usage cosmétique ou pharmaceutique, en utilisant la technique de l'injection-soufflage ou de l'extrusion-soufflage. Par exemple, en extrusion-soufflage, la paraison qui sort verticalement de l'extrudeuse est introduite dans un moule en deux parties, puis écartée par soufflage dans ce moule. On coupe ensuite le sommet du col ainsi formé dans le moule, puis on ouvre le moule en écartant ses deux parties : le flacon terminé tombe alors dans un bac récepteur ou sur un convoyeur d'évacuation.

La figure 1 jointe est une vue schématique en perspective d'un tel flacon 1 de type connu. Il comporte une nervure continue 2, dite "plan de joint", qui est due à la ligne de séparation des deux parties du moule. A l'impression du motif de décoration 3, il apparaît un défaut d'aspect si ce motif 3 chevauche le plan de joint 2. Pour éviter ceci, on est amené à prévoir sur le flacon un repère de position 4 qui sert à placer, dans l'imprimante, le flacon 1, de manière que l'impression ne chevauche pas ce plan de joint 2. Il est en outre ensuite nécessaire de vérifier le produit fini. Ces nécessités ont pour inconvénient de compliquer à la fois l'installation et le procédé d'impression.

Par ailleurs, ces flacons plastiques sont assez peu rigides, et ils se déformeraient sous l'action du rouleau imprimeur, ou "blanchet", si l'on n'appliquait pas une surpression d'air dans le flacon pendant l'impression. Là encore, l'application de cette surpression complique l'installation d'impression.

Enfin, un dernier inconvénient de cette réalisation par injection-soufflage ou extrusion-soufflage est le manque de régularité en épaisseur du flacon obtenu.

On connaît de US-A-2 913 768 un procédé de réalisation et de décoration d'un contenant plastique selon lequel on réalise ce contenant par injection thermoplastique du corps seul, c'est-à-dire sans col ni fond, puis on réalise l'impression de la décoration avec le corps du contenant enfilé sur un mandrin, ensuite de quoi on fixe le col et le fond réalisés séparément sur le corps ainsi décoré.

La présente invention a pour but d'obvier à ces inconvénients.

L'invention a donc pour objet un procédé de réalisation et de décoration d'un contenant plastique comportant au moins un col. Selon l'invention, on réalise par injection thermoplastique le corps du contenant soit seul, soit avec le ou les cols sans le fond, soit avec le fond sans le ou les cols, puis on réalise l'impression de la décoration avec le corps enfilé sur un mandrin, en suite de quoi on fixe le ou les cols et/ou le fond, réalisé(s) séparément, sur le corps ainsi décoré, caractérisé en ce que le ou les cols et/ou le fond est/sont réalisé(s) chacun en une matière plastique propre, différente de celle constituant le corps.

L'invention sera bien comprise, et ses avantages et autres caractéristiques ressortiront, au cours de la description suivante d'un exemple non limitatif de réalisation, en référence aux dessins schématiques annexés dans lesquels :
Figure 2 est une vue en coupe longitudinale d'un flacon réalisé par ce procédé, avant impression et assemblage ;
Figure 3 est une représentation très simplifiée de l'opération d'impression d'une décoration sur ce flacon.

En se référant à la figure 2, on réalise tout d'abord, par injection thermoplastique, le corps cylindrique 5 du flacon, son fond 6 et son col 7. Par la technique d'injection, les épaisseurs de ces trois éléments sont bien régulières et il n'y a pas de plan de joint. En variante, seul le corps 5 est réalisé par injection, et les deux autres éléments 6 et 7 sont réalisés par tout autre technique.

L'impression est ensuite réalisée en enfilant le corps 5 sur un mandrin 8, figure 3, ce qui permet d'avoir un parfait appui sur le blanchet 9 de l'imprimante. Cette technique d'impression des corps creux de révolution, à génératrices parallèles ou non, par enfilage de ce corps dans un mandrin, est une technique connue en soi.

Après cette opération d'impression, le fond 6 et le col 7 sont assemblés par collage, clipsage, sur le corps 5. En variante, ils pourraient aussi être assemblés par vissage, si les trois éléments 5 à 7 sont réalisés pour présenter des filetages en conséquence.

L'invention n'est bien évidemment pas limitée à l'exemple de réalisation qui vient d'être décrit. Le contenant plastique peut avoir d'autres formes (forme elliptique, tronconique, polygonale, ...). On peut réaliser, par injection tout d'abord, l'ensemble du corps 5 et du col 7, ou bien l'ensemble du corps 5 et du fond 6, puis, après impression, assembler sur cet ensemble l'élément restant, respectivement 6 ou 7, cet élément ayant été, soit lui aussi réalisé par injection, soit réalisé par tout autre technique. Un autre avantage du procédé de l'invention est que l'on peut réaliser les différents éléments à assembler, par exemple 5, 6 et 7, par injection de matières plastiques de différentes couleurs, ce qui donne au flacon obtenu une esthétique différente de celle obtenue avec les procédés connus jusqu'alors.

L'invention s'applique à toutes sortes de contenants, qu'ils soient de révolution ou non. Ils peuvent être par exemple parallélépipédiques, de section carrée, rectangulaire, ou triangulaire. Les différents éléments 5,6,7 à assembler peuvent être de matières plastiques différentes. Un même contenant peut comporter plusieurs cols identiques ou différents. Le corps 5 peut comporter un ou plusieurs cloisonnements latéraux ou verticaux. Le ou les cols peuvent comporter un bouchage intégré, du type simple ou non, une inviolabilité avec déchirement possible, une pompe doseuse intégrée, etc....

## Revendications

1. Procédé de réalisation et de décoration d'un contenant plastique comportant au moins un col (7), selon lequel on réalise par injection thermoplastique le corps (5) du contenant soit seul, soit avec le ou les cols (7) sans le fond (6), soit avec le fond (6) sans le ou les cols, puis on réalise l'impression de la décoration avec le corps (5) enfilé sur un mandrin (8), en suite de quoi on fixe le ou les cols (7) et/ou le fond (6), réalisé(s) séparément, sur le corps (5) ainsi décoré, caractérisé en ce que le ou les cols (7) et/ou le fond (6) est/sont réalisé(s) chacun en une matière plastique propre, différente de celle constituant le corps (5).

2. Procédé selon la revendication 1 caractérisé en ce que le ou les cols (7) et/ou du fond (6) est/sont réalisé(s) en une matière plastique de couleur différente de celle du corps (5).

3. Procédé selon la revendication 1 ou 2, caractérisé en ce que la fixation du ou des cols (7) et/ou du fond (6), est réalisée par vissage.

## Claims

1. Method for embodying and decorating a plastic container comprising at least one neck (7), the body (5) of the container being embodied via thermoplastic injection either alone or with the neck(s) (7) without the bottom (6), or with the bottom (6) without the neck(s), printing of the decoration being embodied with the body (5) threaded on a mandrel (8) following which the neck(s) (7) and/or the bottom (6) embodied separately are secured to the decorated body (5), wherein the neck(s) (7) and/or the bottom (6) is/are each made of a suitable plastic material differing from that constituting the body (5).

2. Method acording to claim 1, wherein the neck(s) (7) and/or the bottom (6) is/are made of a plastic material having a color differing from that of the body (5).

3. Method according to claim 1 or 2, wherein the fixing of the neck(s) (7) and/or the bottom (6) is effected by screwing.

## Patentansprüche

1. Verfahren zum Herstellen und Dekorieren eines Kunststoffbehälters mit mindestens einem Halsteil (7) gemäß welchem der Behälterkorper (5) zuerst entweder allein oder mit dem bzw den Halsteilen (7) und ohne den Boden (6) oder mit dem Boden (6) und ohne das bzw die Halsteile (7) durch thermoplastischen Spritzguß angefertigt wird und anschließend der Behälter bei auf einen Kern (8) aufgezogenem Körper (5) bedruckt bzw. dekoriert wird, wonach das bzw. die Halsteile (7) und/oder der Boden (6) - sofern diese getrennt vom Körper hergestellt werden - an dem bedruckten bzw. dekorierten Körper (5) befestigt werden, dadurch gekennzeichnet, daß das bzw. die Halsteile (7) und/oder der Bodem (6) jeweils aus einem eigenen Kunststoff gefertigt sind, der sich von dem des Körpers (5) unterscheidet.

2. Verfahren nach Patentanspruch 1, dadurch gekennzeichnet, daß das bzw. die Halsteile (7) und/oder der Boden (6) jeweils aus einem Kunststoff gefertigt sind, dessen Farbe sich von der des Körpers (5) unterscheidet.

3. Verfahren nach Patentanspruch 1 oder 2, dadurch gekennzeichnet, daß die Befestigung des bzw. der Halsteile (7) und/oder des Bodens (6) durch Verschrauben erfolgt.
